Europäisches Patentamt

(19) European Patent Office

Office européen des brevets

(11) Publication number: **0 085 197**
**A1**

(12) # EUROPEAN PATENT APPLICATION

(21) Application number: **82200113.7**

(22) Date of filing: **28.01.82**

(51) Int. Cl.³: **F 16 K 11/085**
**F 16 K 5/04**

(43) Date of publication of application:
**10.08.83 Bulletin 83/32**

(84) Designated Contracting States:
**FR GB IT NL**

(71) Applicant: **Applied Power Inc.**
**250 South Executive Drive**
**Brookfield Wisconsin 53005(US)**

(72) Inventor: **Sonneborn, Lambertus Johannes**
**Waterhamskamp 15**
**NL-7576 EM Oldenzaal(NL)**

(74) Representative: **Boelsma, Gerben Harm, Ir. et al,**
**Octroolbureau Polak & Charlouis Laan Copes van**
**Cattenburch 80**
**NL-2585 GD Den Haag(NL)**

(54) **A hydraulic valve device.**

(57) The valve device has a housing (3) with apertures (4,5,6) communicatable with conduits (7) in a cylindrical valve body (1). An annular sealing means (9) is an integral piece constituted by a disc having a central aperture (10) and at its head wall remote from the housing bore (2) a flexible lip (11) extending axially of the valve body (1). The sealing means may be made from a polyamide.

FIG 1

A hydraulic valve device.

The invention relates to a hydraulic valve device comprising a housing having a valve body movable in a bore thereof, a plurality of apertures opening into the bore being provided in the wall of the housing, said apertures being adapted to communicate with a conduit provided in the valve body and opening into the peripheral surface thereof, dependent on the position of the valve body, an annular sealing means being provided in the counterbored . conduit mouth, said sealing means being in engagement with the bore wall.

Such a hydraulic valve device is known from the German Gebrauchsmuster 7408649. The application of a sealing means in the transition(s) of the aperture(s) between the housing and the mouth(s) of the conduit in the valve body has the advantage that a relatively large clearance is acceptable between the bore wall and the valve body without this being at the cost of the leak tightness of the valve device as is the case with other known constructions without such a sealing means. A larger clearance means larger manufacturing tolerances and therefore cheaper manufacture while the valve body may more easily be actuated with a larger clearance than with a narrow clearance of the valve body in the bore. In the known construction according to the above mentioned Gebrauchsmuster the sealing means is composed of two parts namely an annulus of relatively hard material engaging the bore wall and an annulus of relatively very elastic material which in prestressed condition is received in the counterbore of the conduit mouth in the valve body and pushes the first mentioned annulus outwardly against the bore wall.

The invention aims at improving said known valve device. This aim is achieved according to the invention in that the sealing means is an integral piece and comprises at its head wall remote from the bore wall a flexible lip extending in axial direction along the periphery.

As the material for the integral sealing means e.g. a polyamide, e.g. such as known under the name "Nylon-6",is suitable. Such a material has a certain compressibility so that the sealing means in combination with the flexible character of the head wall of the means at its end remote from the bore wall may be mounted in prestressed condition whereas the material on the other hand has sufficient wear resistance along the bore wall.

Due to the particular structure or shaping of the sealing means there is achieved, moreover, that the sealing means is pushed stronger in engagement with the bore wall or the wall of the counterbore of the conduit mouth as the pressure in the aperture or the conduit respectively is higher. Under the influence of this pressure namely on the one hand the flexible lip will be pressed in the radial direction against the counterbore wall while on the other hand a force will be imparted to the annular surface of the means situated within the lip around the central through-going aperture of the means which will more forceably engage the means against the bore wall. By embodying the sealing means as an integral piece this is, moreover, simpler and thereby cheaper than in the known construction.

Further features of the invention are hereunder further explained with reference to the drawing of an embodiment.

Fig. 1 is a cross-section through a hydraulic valve device according to the invention and

Fig. 2 shows a section on enlarged scale of a detail of the valve device according to Fig. 1.

Fig. 3 shows the sealing means in unstressed condition.

In the embodiment shown in the drawing the substantially cylindrical valve body 1 is rotatably received in the bore 2 of the valve housing 3. The housing 3 in this example has three apertures 4, 5 and 6, the aperture 5 e.g. being adapted for communication with a source of hydraulic fluid. By means of the valve device the hydraulic fluid supplied to the aperture 5 may be selectively passed through to any of both apertures 4 and 6, said last mentioned apertures e.g. being adapted to be connected to a hydraulic piston-cylinder device. For this purpose the valve cylinder 1 has a conduit 7 comprising two intersecting radial bores 7a and 7b respectively, said conduit opening at the valve cylinder periphery at two positions which are mutually spaced at $90^{\circ}$. The conduit is counterbored at both opening positions 8. In each of the cylindrical counterbores 8, a sealing means 9 made of a polyamide such as Nylon-6 is received.

The sealing means 9 is constituted by a disc provided with a central through-going aperture 10, one head wall of said disc being adapted to the curvature of the wall of the bore 2 and the other head wall being annularly recessed such that at the periphery a lip 11 extending in axial direction has been formed.

In unstressed condition the peripheral lip 11 may be somewhat conical in shape so that said lip when mounting the sealing means 9 in the counterbore 8 is moved somewhat inwardly so that the means 9, as seen in the radial direction, engages the peripheral wall of the counterbore 8 in somewhat prestressed condition. The axial dimension of the means 9 furthermore is such that the means likewise in the axial direction (or radially relative to the valve cylinder 1 respectively) is enclosed in prestressed condition between the bottom of the counterbore 8 and the wall of the bore 2.

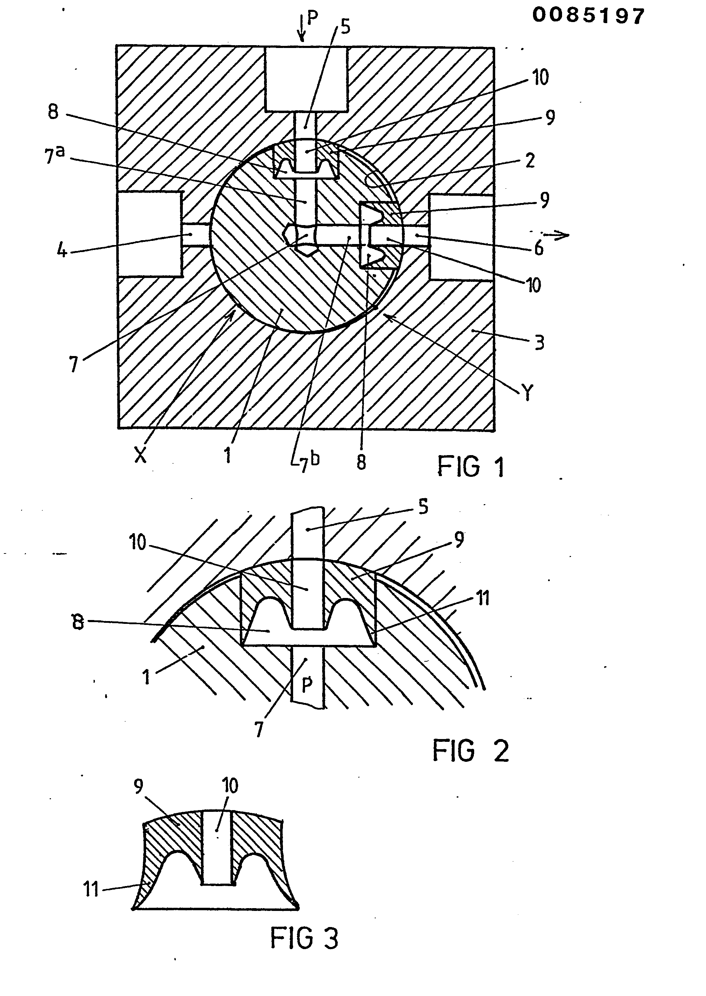

As shown in the drawing there is a relatively large clearance between the bore 2 and the valve cylinder 1. It may be seen in the drawing that the head surface of the sealing means 9 remote from the bore wall is for the greater part freely exposed so that the pressure p prevailing in the conduit 7 may act thereon whereby a radially outwardly directed force, as seen relative to the valve cylinder 1, is imparted to the sealing means 9 whereby this is pressed into engagement with the bore wall. Simultaneously the peripheral lip 11 is pressed into engagement with the peripheral wall of the counterbore 8 by said pressure. It will be clear that when the valve cylinder 1 is rotated to the left through 90° from the position of Fig. 1 the apertures 4 and 5 are mutually connected. Simultaneously therewith the clearance between the bore 2 and the valve cylinder 1 is displaced such that the contact point between both moves from position x to position y.

It will be clear that the invention may likewise advantageously be applied to a valve device having a valve body being slidable instead of rotatable relative to the housing.

## C L A I M S

1.      A hydraulic valve device comprising a housing having a valve body being movable in a bore thereof, a plurality of apertures opening into the bore being provided in the housing wall, said apertures being adapted to communicate with a conduit provided in the valve body, an annular sealing means pressing against the bore wall being provided in the counterbored. mouth of the conduit, characterized in that the sealing means is an integral piece and has at its head wall remote from the bore wall a flexible lip extending in axial direction along the periphery.

2.      Valve device according to claim 1, characterized in that the peripheral lip has a thickness that gradually increases in the direction of the other head end.

3.      Valve device according to claim 1, 2, characterized in that the peripheral lip in unstressed condition has a peripheral shape that somewhat conically widens towards its head end wall.

4.      Valve device according to claims 1 to 3, characterized in that the sealing means has been manufactured from a polyamide.

1/1

0085197

FIG 1

FIG 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A- 928 299 (TEMPLE INSTRUMENTS) *Claims, point 1; figure 1* | 1 | F 16 K 11/085 F 16 K 5/04 |
| A | FR-A-2 410 776 (HANSA METALLWERKE) *Claims, point 1; figures* | 1 | |
| A | DE-A-2 411 879 (EMIL WEBER FABRIK FÜR ÖLHYDRAULIK) | | |
| A | GB-A-1 326 254 (RELF RESEARCH) | | |
| A | FR-A-2 241 736 (WATTS) | | |

TECHNICAL FIELDS SEARCHED (Int. Cl. 3)

F 16 K

The present search report has been drawn up for all claims

| Place of search THE HAGUE | Date of completion of the search 21-09-1982 | Examiner VAN REETH A.L.J. |
|---|---|---|